(19) Europäisches Patentamt / European Patent Office / Office européen des brevets

(11) EP 3 107 141 A1

(12) **EUROPEAN PATENT APPLICATION**
published in accordance with Art. 153(4) EPC

(43) Date of publication:
21.12.2016 Bulletin 2016/51

(51) Int Cl.:
*H01M 8/16* (2006.01)      *H01M 4/86* (2006.01)
*H01M 4/90* (2006.01)      *H01M 4/96* (2006.01)
*H01M 8/02* (2006.01)

(21) Application number: 15749515.1

(22) Date of filing: 22.01.2015

(86) International application number:
PCT/JP2015/000285

(87) International publication number:
WO 2015/122125 (20.08.2015 Gazette 2015/33)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.02.2014 JP 2014025391

(71) Applicant: Panasonic Corporation
Kadoma-shi, Osaka 571-8501 (JP)

(72) Inventors:
• SUZUKI, Yuya
Osaka-shi, OSAKA 540-6207 (JP)
• USUI, Hiroaki
Osaka-shi, OSAKA 540-6207 (JP)

(74) Representative: Müller-Boré & Partner
Patentanwälte PartG mbB
Friedenheimer Brücke 21
80639 München (DE)

(54) **MICROBIAL FUEL CELL, MICROBIAL FUEL CELL SYSTEM, AND METHOD FOR USING MICROBIAL FUEL CELL**

(57)     A microbial fuel cell (1) includes an electrolysis solution (2) including organic matter, a negative electrode (3) holding anaerobic microorganisms and being in contact with the electrolysis solution, and a positive electrode (4) including a water-repellent layer (41) and a gas diffusion layer (42) placed on the water-repellent layer. A ratio of an area of the negative electrode to an area of the gas diffusion layer is defined as $T_1$, and a ratio of a maximum current density of the positive electrode at an electric potential of the positive electrode in an electrode system including the electrolysis solution, the negative electrode, and the positive electrode to a maximum current density of the negative electrode at an electric potential of the negative electrode in the electrode system is defined as $T_2$. The ratios $T_1$ and $T_2$ satisfy the relationship of the expression (1): $T_2^{1/2} \leq T_1 \leq T_2^2$.

FIG. 1

**Description**

TECHNICAL FIELD

The present invention relates to a microbial fuel cell, a microbial fuel cell system, and a method for using a microbial fuel cell.

BACKGROUND ART

Microbial fuel cells convert chemical energy of organic matter contained in wastewater into electrical energy through a catalytic reaction of microorganisms (metabolism, biochemical conversion), and oxidize and reduce the organic matter. Such microbial fuel cells produce the electrical energy directly from the organic matter by the action of microorganisms. The microbial fuel cells are therefore expected to improve energy recovery efficiency compared with conventional energy recovery systems that go through a process of converting organic matter into biogas for energy recovery. Such microbial fuel cells are utilized not only for power generation but also for wastewater treatment, organic waste treatment, and incidental facilities for organic waste treatment.

A microbial fuel cell includes a negative electrode holding microorganisms and a positive electrode brought into contact with an oxidizing agent, for example. In recent years, this type of microbial fuel cell including a gas diffusion electrode as a positive electrode is receiving increased attention (for example, Patent Literature 1). Since such a gas diffusion electrode is porous, oxygen in a gas phase (such as an atmosphere) is supplied to the positive electrode. Accordingly, hydrogen ions and electrons produced in the negative electrode can react with the oxygen in the gas phase.

CITATION LIST

PATENT LITERATURE

Patent Literature 1: Japanese Unexamined Patent Application Publication No. 2010-102953

SUMMARY OF INVENTION

As described in Patent Literature 1, when a positive electrode is a porous gas diffusion electrode, electrochemical reaction efficiency is significantly high in the positive electrode. However, the electrochemical reaction efficiency is not sufficiently enhanced in a negative electrode compared with that in the positive electrode because the electrochemical reaction in the negative electrode involves microorganisms. This results in a performance imbalance between the negative electrode and the positive electrode that is the gas diffusion electrode.

Since the conventional microbial fuel cells have not been focused on a performance imbalance between the electrodes, problems derived from the imbalance have not been recognized. However, the performance imbalance between the electrodes shows that materials of one electrode having higher performance are excessive, which should be solved in view of conservation of recourses.

The present invention has been made in view of the above-described conventional problem. An object of the present invention is to provide a microbial fuel cell with a performance imbalance between electrodes minimized. Another object of the present invention is to provide a microbial fuel cell system using the microbial fuel cell, and a method for using the microbial fuel cell.

In order to solve the problem described above, a first aspect of the present invention provides a microbial fuel cell including: an electrolysis solution including organic matter; a negative electrode holding anaerobic microorganisms and being in contact with the electrolysis solution; and a positive electrode including a water-repellent layer and a gas diffusion layer placed on the water-repellent layer. A ratio of an area of the negative electrode to an area of the gas diffusion layer is defined as $T_1$, and a ratio of a maximum current density of the positive electrode at an electric potential of the positive electrode in an electrode system including the electrolysis solution, the negative electrode, and the positive electrode to a maximum current density of the negative electrode at an electric potential of the negative electrode in the electrode system is defined as $T_2$. The ratios $T_1$ and $T_2$ satisfy a relationship of $T_2^{1/2} \leq T_1 \leq T_2^2$.

A second aspect of the present invention provides a method for using a microbial fuel cell, including a step of preparing the microbial fuel cell including: an electrolysis solution including organic matter; a negative electrode holding anaerobic microorganisms and being in contact with the electrolysis solution; and a positive electrode including a water-repellent layer and a gas diffusion layer placed on the water-repellent layer. A ratio of an area of the negative electrode to an area of the gas diffusion layer is defined as $T_1$, and a ratio of a maximum current density of the positive electrode at an electric potential of the positive electrode in an electrode system including the electrolysis solution, the negative electrode, and the positive electrode to a maximum current density of the negative electrode at an electric potential of the negative electrode in the electrode system is defined as $T_2$. The method for using the microbial fuel cell further includes a step of operating the microbial fuel cell in a manner such that the ratios $T_1$ and $T_2$ satisfy a relationship of $T_2^{1/2} \leq T_1 \leq T_2^2$.

BRIEF DESCRIPTION OF DRAWINGS

[Fig. 1] Fig. 1 is a cross-sectional view schematically showing a microbial fuel cell according to the present embodiment and a microbial fuel cell system including the microbial fuel cell.
[Fig. 2] Fig. 2(a) is a cross-sectional view showing an example of a positive electrode according to the present embodiment, and Fig. 2(b) is a front view of the positive electrode.
[Fig. 3] Fig. 3 is a front view showing another example of a positive electrode according to the present embodiment.
[Fig. 4] Fig. 4 is a front view showing still another example of a positive electrode according to the present embodiment.
[Fig. 5] Fig. 5 is a front view showing still another example of a positive electrode according to the present embodiment.
[Fig. 6] Fig. 6 is a side view showing another example of a microbial fuel cell system according to the present embodiment.
[Fig. 7] Fig. 7 is a plan view showing still another example of a microbial fuel cell system according to the present embodiment.

DESCRIPTION OF EMBODIMENTS

A microbial fuel cell, a microbial fuel cell system, and a method for using a microbial fuel cell according to the present embodiment will be described in detail below. It should be noted that the features in the drawings are not necessarily drawn to scale, and may be arbitrarily enlarged to improve drawing legibility.

[First Embodiment]

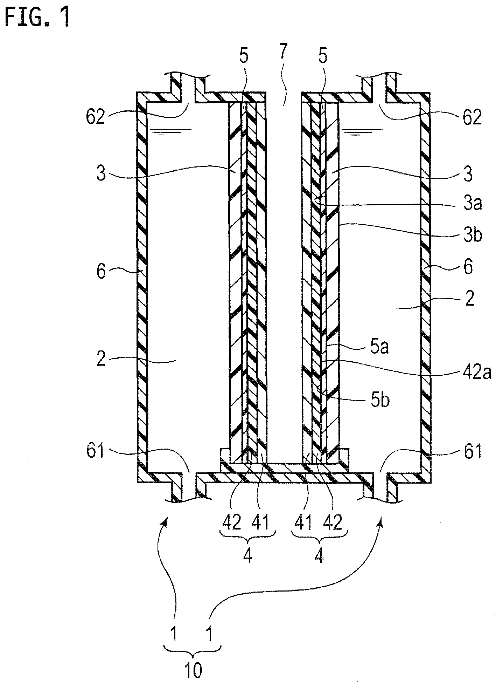

As shown in Fig. 1, a microbial fuel cell 1 according to the present embodiment includes an electrolysis solution 2, a negative electrode 3, a positive electrode 4, and a separating membrane 5. The electrolysis solution 2 includes organic matter. The negative electrode 3 holds anaerobic microorganisms and is in contact with the electrolysis solution 2. The positive electrode 4 is a gas diffusion electrode including a water-repellent layer 41 and a gas diffusion layer 42 placed on the water-repellent layer 41.

A ratio of the area of the negative electrode 3 in a direction vertical to the stacking direction of the negative electrode 3, the positive electrode 4, and the separating membrane 5 (in a plane direction) to the area of the gas diffusion layer 42 in the plane direction ([area of negative electrode]/[area of gas diffusion layer]), is defined as $T_1$. A ratio of a maximum current density of the positive electrode 4 at an electric potential of the positive electrode 4 in an electrode system including the electrolysis solution 2, the negative electrode 3, and the positive electrode 4 to a maximum current density of the negative electrode 3 at an electric potential of the negative electrode 3 in the electrode system ([maximum current density of positive electrode]/[maximum current density of negative electrode]), is defined as $T_2$. The ratios $T_1$ and $T_2$ satisfy the relationship of the following expression (1):

$$T_2^{1/2} \leq T_1 \leq T_2^2 \qquad (1)$$

As used herein, the area of the negative electrode 3 and the area of the gas diffusion layer 42 of the present embodiment each are not an actual area but a projected area.
The phrase "maximum current density of the negative electrode 3 at an electric potential of the negative electrode 3 in an electrode system" denotes a maximum current density of the negative electrode 3 when the negative electrode 3 is incorporated into an electrode system in which the current flowing amount is controlled by the negative electrode 3, and when the electric potential of the negative electrode 3 is that in the electrode system of the microbial fuel cell 1. This value is an index of the current flowing properties of the negative electrode 3.
In order to measure the maximum current density of the negative electrode 3, a counter electrode having sufficiently large current flowing properties with respect to the negative electrode 3, is prepared. The counter electrode is preferably an electrode stable during electrochemical measurement, such as a platinum electrode or a carbon electrode, and having a sufficiently large area. The counter electrode may be formed of the same material as in the positive electrode 4 of the microbial fuel cell 1. A reference electrode, such as an Ag/AgCl electrode, is also prepared.

Subsequently, the negative electrode 3 and the counter electrode are placed in an electrolysis solution. The electrolysis solution contains a supporting electrolyte having a concentration without interfering with the electrochemical measurement. Thereafter, the negative electrode 3, the counter electrode, and the reference electrode are connected to a potentiostat, so as to obtain a relationship between an electric potential and an electric current in the negative electrode 3 by linear sweep voltammetry or cyclic voltammetry. According to the result thus obtained, a value of the electric current when the electric potential of the negative electrode 3 is that in the electrode system of the microbial fuel cell 1 is obtained, so as to calculate a current density of the negative electrode 3 based on the obtained value. Note that the area of the negative electrode 3 used for calculating the current density is a projected area of the negative electrode 3 in the plane direction.

The phrase "maximum current density of the positive electrode 4 at an electric potential of the positive electrode 4 in an electrode system" denotes a maximum current density of the positive electrode 4 when the positive electrode 4 is incorporated into an electrode system in which the current flowing amount is controlled by the positive electrode 4, and when the electric potential of the positive electrode 4 is that in the electrode system of the microbial fuel cell 1. This value is an index of the current flowing properties of the positive electrode 4.

In order to measure the maximum current density of the positive electrode 4, a counter electrode having sufficiently large current flowing properties with respect to the positive electrode 4, is prepared. The counter electrode is preferably an electrode stable during electrochemical measurement, such as a platinum electrode or a carbon electrode, and having a sufficiently large area. The counter electrode may be formed of the same material as in the negative electrode 3 of the microbial fuel cell 1. A reference electrode, such as an Ag/AgCl electrode, is also prepared.

Subsequently, the positive electrode 4 and the counter electrode are placed in an electrolysis solution. The electrolysis solution contains a supporting electrolyte having a concentration without interfering with the electrochemical measurement. Thereafter, the positive electrode 4, the counter electrode, and the reference electrode are connected to a patentiostat, so as to obtain a relationship between an electric potential and an electric current in the positive electrode 4 by linear sweep voltammetry or cyclic voltammetry. According to the result thus obtained, a value of the electric current when the electric potential of the positive electrode 4 is that in the electrode system of the microbial fuel cell 1 is obtained, so as to calculate a current density of the positive electrode 4 based on the obtained value. Note that the area of the positive electrode 4 used for calculating the current density is a projected area of the gas diffusion layer 42 of the positive electrode 4 in the plane direction.

The microbial fuel cell 1 according to the present invention as described above is configured such that the ratio of the area of the negative electrode 3 holding microorganisms to the area of the gas diffusion layer 42 of the positive electrode 4 is set to an appropriate value depending on the respective properties of the negative electrode 3 and the positive electrode 4. This minimizes a performance imbalance between the positive electrode 4 and the negative electrode 3 in the microbial fuel cell 1. Namely, the ratios $T_1$ and $T_2$ satisfying the relationship of $T_2^{1/2} \leq T_1$ prevents the performance of the positive electrode 4 from excessively being enhanced compared with the negative electrode 3 in the microbial fuel cell 1. Similarly, the ratios $T_1$ and $T_2$ satisfying the relationship of $T_1 \leq T_2^2$ prevents the performance of the negative electrode 3 from excessively being enhanced compared with the positive electrode 4 in the microbial fuel cell 1.

Since the microbial fuel cell 1 according to the present embodiment is configured such that the area of the negative electrode 3 and the area of the positive electrode 4, which are typically set to the same value, are each set to an appropriate value, a performance imbalance between the positive electrode 4 and the negative electrode 3 in the microbial fuel cell 1 can be minimized.

The configurations of the microbial fuel cell 1 and a microbial fuel cell system 10 according to the present embodiment are described in more detail below with reference to Fig. 1.

As described above, the microbial fuel cell 1 according to the present embodiment includes the negative electrode 3, the positive electrode 4, the separating membrane 5, and a case 6 housing these elements.

A shown in Fig. 1, the negative electrode 3, the positive electrode 4, and the separating membrane 5 are placed in the case 6. In the present embodiment, the negative electrode 3, the separating membrane 5, and the positive electrode 4 are sequentially stacked. More particularly, the microbial fuel cell 1 has a configuration in which the negative electrode 3 is arranged in contact with one surface 5a of the separating membrane 5, and the positive electrode 4 is arranged in contact with the other surface 5b opposite to the one surface 5a of the separating membrane 5. The gas diffusion layer 42 of the positive electrode 4 is in contact with the separating membrane 5, and the water-repellent layer 41 is exposed to a space 7 filled with a gas phase, as described below.

The case 6 holds the electrolysis solution 2. The case 6 is provided with a supply port 61 and a discharge port 62. The electrolysis solution 2 is supplied into the case 6 through the supply port 61 from the outside of the microbial fuel cell 1. The electrolysis solution 2 after subjected to treatment in the microbial fuel cell 1 is discharged to the outside of the microbial fuel cell 1 through the discharge port 62.

The electrolysis solution 2 contains organic matter. The electrolysis solution 2 may include an electrolyte such as $KH_2PO_4$, $K_2HPO_4$, (NH4)2SO4, $MgSO_4 \cdot 7H_2O$, NaCl, $CaCl_2 \cdot 2H_2O$, or $Na_2S_2O_3 \cdot 5H_2O$.

The negative electrode 3 preferably contains, for example, at least one of carbon and platinum. The negative electrode 3 holds anaerobic microorganisms. The negative electrode 3 includes a first surface 3a and a second surface 3b opposite to the first surface 3a. The first surface 3a faces the positive electrode 4 with the separating membrane 5 interposed therebetween, and the anaerobic microorganisms arc held on the second surface 3b. A biofilm including the anaerobic microorganisms is placed and fixed onto the second surface 3b of the negative electrode 3, so that the anaerobic microorganisms are held by the negative electrode 3. A biofilm is, in general, a three-dimensional structure including a microbial colony and an extracellular polymeric substance (EPS) that the microbial colony produces. The anaerobic microorganisms are not necessarily held by the negative electrode 3 via the biofilm.

The anaerobic microorganisms held by the negative electrode 3 are preferably electricity-producing bacteria having, for example, an extracellular electron transfer mechanism. Specific examples of anaerobic microorganisms include Geobacter, Shewanella, Aeromonas, Geothrix, and Saccharomyces.

The separating membrane 5 may include any configuration and material that can allow hydrogen ions to move between the negative electrode 3 and the positive electrode 4. The separating membrane 5 may be a proton conductive membrane such as a cation exchange membrane and an anion exchange membrane. The separating membrane 5 may be a membrane that has sequential spaces therein, such as a nonwoven fabric, a glass fiber film, or filter paper, so that hydrogen ions can move from the negative electrode 3 to the positive electrode 4.

The separating membrane 5 is preferably, for example, an ion exchange membrane or a solid electrolyte membrane. The separating membrane 5 may be a fluororesin ion exchange membrane having proton conductivity, such as Nation (registered trademark, available from DuPont Company) and Filemion (registered trademark, available from Asahi Glass Co., Ltd.).

The positive electrode 4 is a gas diffusion electrode including the water-repellent layer 41 and the gas diffusion layer 42 placed in contact with the water-repellent layer 41.

The water-repellent layer 41 has both water repellency and gas permeability. The water-repellent layer 41 is configured to allow gas to move from a gas phase to a liquid phase in the electrochemical system in the microbial fuel cell 1, while separating the gas phase from the liquid phase in a favorable state. In particular, the water-repellent layer 41 allows oxygen in the gas phase in the space 7 to pass therethrough to reach the gas diffusion layer 42. The water-repellent layer 41 is preferably a porous layer. The water-repellent layer 41 can therefore have high gas permeability.

The gas diffusion layer 42 preferably includes, for example, a porous electrical conductive material and a catalyst supported on the electrical conductive material. Alternatively, the gas diffusion layer 42 may be a porous catalyst having electrical conductivity.

In the present embodiment, the negative electrode 3, the separating membrane 5, and the positive electrode 4 are placed in the case 6. The water-repellent layer 41 of the positive electrode 4 is located toward the space 7. The surface of the water-repellent layer 41 on the opposite side of the gas diffusion layer 42 is exposed to the gas phase outside the case 6. The oxygen in the gas phase can be supplied to the gas diffusion layer 42 through the water-repellent layer 41. The gas diffusion layer 42 of the positive electrode 4 is in contact with the separating membrane 5 so as to face the negative electrode 3 with the separating membrane 5 interposed therebetween.

The microbial fuel cell system 10 of the present embodiment includes two microbial fuel cells 1. The microbial fuel cell system 10 of the present embodiment preferably includes a plurality of microbial fuel cells 1.

As shown in Fig. 1, the two microbial fuel cells 1 of the present embodiment are arranged such that the respective water-repellent layers 41 are opposed to each other. The water-repellent layer 41 of one of the microbial fuel cells 1 is opposed to the water-repellent layer 41 of the other microbial fuel cell 1 at a distance. The space 7 filled with the gas phase is interposed between the two water-repellent layers 41. The microbial fuel cell system 10 is configured such that the space 7 is open to the outside air, or air is externally supplied to the space 7 via a pump, for example.

A gap may be provided between the positive electrode 4 and the separating membrane 5, and a gap may be provided between the negative electrode 3 and the separating membrane 5.

The microbial fuel cell 1 according to the present embodiment satisfies the relationship of $T_2^{1/2} \leq T_1 \leq T_2^2$ as described above. The elements $T_1$ and $T_2$ preferably satisfy the relationship of $T_1 \leq T_2^{1.5}$, more preferably $T_1 \leq T_2^{1.2}$. The elements $T_1$ and $T_2$ also preferably satisfy the relationship of $T_2^{1/1.5} \leq T_1$, more preferably $T_2^{1/1.2} \leq T_1$.

When the elements $T_1$ and $T_2$ satisfy the relationship as described above, the area of the gas diffusion layer 42 in the plane direction is, in general, smaller than the area of the negative electrode 3 in the plane direction. More particularly, the area of the main surface 42a of the gas diffusion layer 42 is smaller than the area of the main surface (the first surface 3a, the second surface 3b) of the negative electrode 3. The ratio of the area of the gas diffusion layer 42 to the area of the negative electrode 3 is therefore preferably in the range of 0.1 to 0.9.

As viewed in the stacking direction of the negative electrode 3, the positive electrode 4, and the separating membrane 5, the projected area of the water-repellent layer 41 of the positive electrode 4 conforms to the projected area of the negative electrode 3. When the elements $T_1$ and $T_2$ satisfy the relationship described above, however, the projected area of the gas diffusion layer 42 is smaller than the projected area of the water-repellent layer 41. The surface of the water-repellent layer 41 toward the negative electrode 3 therefore includes an area on which the gas diffusion layer 42 is placed and an area on which the gas diffusion layer 42 is not placed.

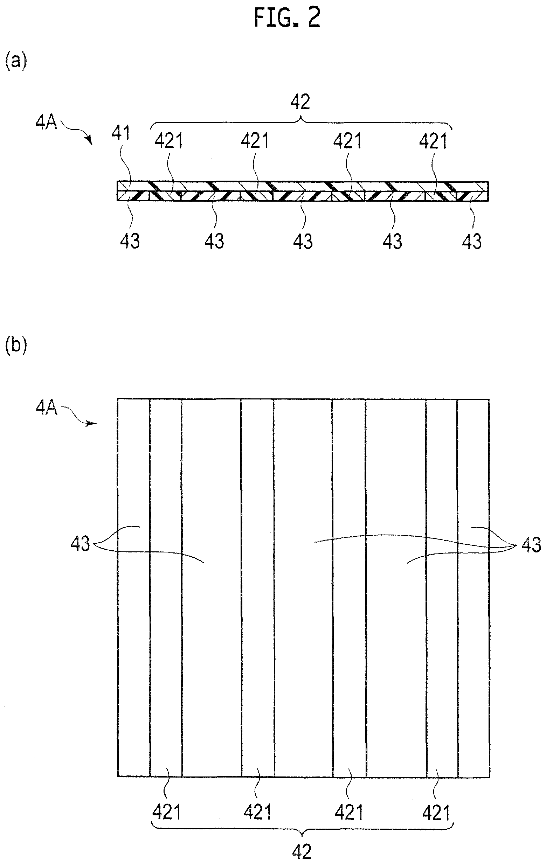

As shown in Fig. 2, the positive electrode 4A of the present embodiment therefore preferably has a configuration in which the gas diffusion layer 42 partly overlaps with the water-repellent layer 41. The gas diffusion layer 42 of the present embodiment preferably includes a plurality of layers 421 placed on the water-repellent layer 41 and separated from each other in the direction vertical to the stacking direction of the negative electrode 2 and the positive electrode 4. Each of the layers 421 is placed on the surface of the water-repellent layer 41 toward the negative electrode 3.

As shown in Fig. 2, the separated layers 421 of the gas diffusion layer 42 are preferably arranged at regular intervals on the surface of the water-repellent layer 41 toward the negative electrode 3. This minimizes an excessive increase in distance between the negative electrode 3 and the gas diffusion layer 42. In particular, when the negative electrode 3 faces the gas diffusion layer 42 having a smaller area than the negative electrode 3, the negative electrode 3 includes regions not facing the gas diffusion layer 42. If the gas diffusion layer 42 is a single layer, there would be portions where the distance between the negative electrode 3 and the gas diffusion layer 42 excessively increases. When the gas diffusion layer 42 includes the plural layers 421 separated from each other and opposed to the negative electrode 3, however, an excessive increase in distance between the negative electrode 3 and the gas diffusion layer 42 is minimized. As a result, the reaction efficiency in the microbial fuel cell system 10 can be improved.

The plural layers 421 is not necessarily separated completely from each other, and may partly be connected via wires in order to ensure electrical conductivity between the respective layers 421.

The water-repellent layer 41 of the present embodiment may be provided with holding bodies 43 placed thereon to hold aerobic microorganisms. In particular, as shown in Fig. 2, aerobic microorganisms are preferably held on part of the surface of the water-repellent layer 41 toward the negative electrode 3 where the gas diffusion layer 42 is not placed. For example, in the direction vertical to the stacking direction of the gas diffusion layer 42 and the water-repellent layer 41, the holding bodies 43 for holding the aerobic microorganism are preferably placed on the regions of the water-repellent layer 41 on which the gas diffusion layer 42 is not placed. Accordingly, the processing of purifying the electrolysis solution 2 can be performed efficiently due to the action of the aerobic microorganisms.

The regions for placing the holding bodies 43 for holding the aerobic microorganisms are provided on the water-repellent layer 41 in the present embodiment. This reduces the spaces for the holding bodies 43 in the microbial fuel cell 1. The water-repellent layer 41 having air permeability can sufficiently supply oxygen to the aerobic microorganisms through the water-repellent layer 41 so as to cultivate the aerobic microorganisms. As a result, the processing of purifying the electrolysis solution 2 can be implemented efficiently without leading to an increase in size or a complicated structure of the microbial fuel cell 1.

Examples of aerobic microorganisms include Escherichia coli, Pseudomonas aeruginosa, and Bacillus subtilis. The holding bodies 43 for holding the aerobic microorganisms may have a nonwoven or sponge-like structure. The holding bodies 43 may be formed of at least one material selected from the group consisting of polyethylene, polypropylene, polyethylene glycol, polyurethane, and polyvinyl alcohol.

The microbial fuel cell 1 according to the present embodiment is in a closed circuit state when the electrolysis solution 2 is supplied to the case 6, and when the negative electrode 3 and the positive electrode 4 are connected to an external circuit, for example. The organic matter in the electrolysis solution 2 is decomposed due to the metabolism of anaerobic microorganisms, so that electrons, protons, and carbon dioxide are produced in the negative electrode 3. The produced electrons flow to the external circuit from the negative electrode 3, and the protons reach the positive electrode 4 through the separating membrane 5. The oxygen supplied to the positive electrode 4 from the gas phase is reduced by reacting with the protons and electrons, so as to produce water. This electrochemical reaction produces electromotive force between the positive electrode 4 and the negative electrode 3, and decomposes the organic matter in the electrolysis solution 2, so as to implement the power generation and the decomposition processing of the organic matter in the electrolysis solution 2.

The microbial fuel cell 1 according to the present embodiment includes the electrolysis solution 2 including the organic matter, the negative electrode 3 holding the anaerobic microorganisms and being in contact with the electrolysis solution 2, and the positive electrode 4 including the water-repellent layer 41 and the gas diffusion layer 42 placed on the water-repellent layer 41. The ratio of the area of the negative electrode 3 to the area of the gas diffusion layer 42 is defined as $T_1$, and the ratio of the maximum current density of the positive electrode 4 at the electric potential of the positive electrode 4 in the electrode system including the electrolysis solution 2, the negative electrode 3, and the positive electrode 4 to the maximum current density of the negative electrode 3 at the electric potential of the negative electrode 3 in the electrode system is defined as $T_2$. The ratios $T_1$ and $T_2$ satisfy the relationship of the following expression (1):

$$T_2^{1/2} \leq T_1 \leq T_2^2 \qquad (1)$$

The method for using the microbial fuel cell 1 includes a step of preparing the microbial fuel cell 1 including the electrolysis solution 2 including the organic matter, the negative electrode 3 holding the anaerobic microorganisms and being in contact with the electrolysis solution 2, and the positive electrode 4 including the water-repellent layer 41 and the gas diffusion layer 42 placed on the water-repellent layer 41. The ratio of the area of the negative electrode 3 to the area of the gas diffusion layer 42 is defined as $T_1$, and the ratio of the maximum current density of the positive electrode 4 at the electric potential of the positive electrode 4 in the electrode system including the electrolysis solution 2, the negative electrode 3, and the positive electrode 4 to the maximum current density of the negative electrode 3 at the electric potential of the negative electrode 3 in the electrode system is defined as $T_2$. The method for using the microbial fuel cell 1 includes a step of operating the microbial fuel cell 1 in a manner such that the ratios $T_1$ and $T_2$ satisfy the relationship of the following expression (1):

$$T_2^{1/2} \leq T_1 \leq T_2^2 \qquad (1)$$

Namely, the microbial fuel cell 1 of the present embodiment is brought to a closed circuit state and is operated in a manner such that the ratios $T_1$ and $T_2$ satisfy the relationship described above. When the microbial fuel cell 1 of the present embodiment is used, compositions of wastewater (the electrolysis solution 2) to be processed are examined, such as types and concentrations of an electrolyte and organic matter in the wastewater, so that the wastewater (the electrolysis solution 2) to be processed is selected. The positive electrode 4 and the negative electrode 3 for processing the wastewater are then designed. Namely, the positive electrode 4 and the negative electrode 3 are designed such that the ratios $T_1$ and $T_2$ satisfy the predetermined relationship depending on the compositions of the wastewater (the electrolysis solution 2). This prevents the performance of the positive electrode 4 from excessively being enhanced compared with the negative electrode 3 in the microbial fuel cell 1, and prevents the performance of the negative electrode 3 from excessively being enhanced compared with the positive electrode 4 in the microbial fuel cell 1.

The water-repellent layer 41 and the gas diffusion layer 42 of the positive electrode 4 in the present embodiment are described in more detail below.

The water-repellent layer 41 is preferably a porous body having water repellency. The water-repellent layer 41 can therefore have high gas permeability. The water-repellent layer 41 is preferably formed of, for example, at least one material selected from the group consisting of polytetratluoraethylene (PTFE), polydimethylsiloxane (PDMS), polyethylene (PE), and polypropylene (PP).

The gas diffusion layer 42 may include a porous electrical conductive material and a catalyst supported on the electrical conductive material. Alternatively, the gas diffusion layer 42 may be a porous catalyst having electrical conductivity.

The electrical conductive material of the gas diffusion layer 42 may include at least one material selected from the group consisting of a carbon substance, an electrical conductive polymer, a semiconductor, and metal. The carbon substance is a substance including carbon as a component. Examples of carbon substances include: graphite; activated carbon; carbon powder such as carbon black, VULCAN (registered trademark) XC-72R, acetylene black, furnace black, and Denka black; carbon fiber such as graphite felt, carbon wool, and carbon woven material; a carbon plate; carbon paper; and a carbon disc. Other examples may include microstructure materials such as carbon nanotube, carbon nanohorn, and carbon nanoclusters.

The electrical conductive polymer is a general term for high molecular compounds having electrical conductivity. Examples of electrical conductive polymers include polymers each including a single monomer or two or more monomers, each of which is aniline, aminophenol, diaminophenol, pyrrole, thiophene, paraphenylene, fluorene, furan, acetylene, or a derivative of this compound. More specific examples of electrical conductive polymers include polyaniline, polyaminophenol, polydiaminophenol, polypyrrole, polythiophene, polyparaphenylene, polyfluorene, polyfuran, and polyacetylene. The electrical conductive material made of metal may be stainless steel mesh. The electrical conductive material is preferably a carbon substance in view of availability, costs, corrosion resistance, and durability.

The electrical conductive material is preferably in the form of powder or fiber. The electrical conductive material may be supported by a supporting body. The supporting body is a member that has rigidity and allows the gas diffusion electrode to have a fixed shape. The supporting body may be either a non-conductive body or an electrical conductive body. When the supporting body is a non-conductive body, examples thereof include: glass; plastics; synthetic rubber; ceramics; waterproofing or water-repellent paper; a plant piece such as a wood piece; and an animal piece such as a bone piece or a shell. Examples of supporting bodies having a porous structure include porous ceramics, porous plastics, and a sponge. When the supporting body is an electrical conductive body, examples thereof include: a carbon substance such as carbon paper, carbon fiber, and a carbon stick; metal; and an electrical conductive polymer. When the supporting body is an electrical conductive body, the supporting body may function as a current collector obtained such that an electrical conductive material on which a carbon material is supported is provided on the surface of the supporting body.

The catalyst of the gas diffusion layer 42 is preferably, for example, a carbon material doped with metal atoms. The metal atoms are preferably, but not limited to, atoms of at least one metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum, and gold. The carbon material including such metal atoms exhibits high performance as a catalyst particularly for enhancing an oxygen reduction reaction and an oxygen generation reaction. The amount of the metal atoms included in the carbon material may be determined as appropriate so that the carbon material exhibits high catalytic performance.

The carbon material is preferably further doped with atoms of at least one nonmetal selected from the group consisting of nitrogen, boron, sulfur, and phosphorus. The amount of the doped non-metal atoms may also be determined as appropriate so that the carbon material exhibits high catalytic performance.

The carbon material is obtained in a manner such that a carbon-based raw material, such as graphite or amorphous carbon, is used as a base, and the carbon-based raw material is doped with metal atoms and atoms of at least one nonmetal selected from the group consisting of nitrogen, boron, sulfur, and phosphorus.

Combinations of the doped metal atoms and non-metal atoms used for the carbon material are selected as appropriate. Particularly, the non-metal atoms preferably include nitrogen, and the metal atoms preferably include iron. The carbon material including these atoms can achieve significantly high catalytic activity. The non-metal atoms may only include nitrogen. The metal atoms may only include iron.

The non-metal atoms may include nitrogen, and the metal atoms may include at least one of cobalt and manganese. The carbon material including such atoms can also achieve significantly high catalytic activity. The non-metal atoms may only include nitrogen. The metal atoms may only include either cobalt or manganese, or may only include cobalt and manganese.

The carbon material may have any shape. For example, the carbon material may have a particle shape or a sheet-like shape. The carbon material having a sheet-like shape may have any size, and may be a minute material. The carbon material having a sheet-like shape may be a porous material. The porous carbon material having a sheet-like shape is preferably, for example, in the form of a woven or non-woven fabric. Such a carbon material can be used for the gas diffusion layer 42 without the electrical conductive material included.

The carbon material serving as a catalyst in the gas diffusion layer 42 may be produced as described below. First, a mixture of a non-metal compound including at least one nonmetal selected from the group consisting of nitrogen, boron, sulfur, and phosphorus, a metal compound, and a carbon-based raw material is prepared. Thereafter, the mixture is heated at a temperature from 800°C or higher to 1000°C or lower, for from 45 seconds or longer to shorter than 600 seconds. This yields the carbon material serving as a catalyst.

As described above, graphite or amorphous carbon may be used for the carbon-based raw material. The metal compound may be any compound that includes metal atoms capable of being coordinated with non-metal atoms doped to the carbon-based raw material. The metal compound may be at least one compound selected from the group consisting of: an inorganic metal salt such as a metal chloride, nitrate, sulfate, bromide, iodize, and fluoride; an organic metal salt such as acetate; a hydrate of an inorganic metal salt; and a hydrate of an organic metal salt. When graphite is doped with iron, for example, the metal compound preferably includes iron(III) chloride. When graphite is doped with cobalt, the metal compound preferably includes cobalt chloride. When the carbon-based raw material is doped with manganese, the metal compound preferably includes manganese acetate. The amount of the metal compound used is preferably determined, for example, such that the metal atoms are present in the metal compound in an amount of from 5% to 30% by mass, more preferably from 5% to 20% by mass, with respect to the carbon-based raw material.

The non-metal compound preferably includes at least one nomnetal selected from the group consisting of nitrogen, boron, sulfur, and phosphorus, as described above. The non-metal compound may be at least one compound selected from the group consisting of pentaethylenehexamine, ethylenediamine, tetraethylenepentamine, tricthylenetetramine, ethylenediamine, octylboronic acid, 1.2-bis(diethylphosphino)ethane, triphenyl phosphite, and benzyl disulfide. The amount of the non-metal compound used is determined as appropriate depending on the amount of the doped non-metal atoms applied to the carbon-based raw material. The amount of the non-metal compound used is preferably determined such that a molar ratio of the metal atoms in the metal compound and the non-metal atoms in the non-metal compound is in the range from 1:1 to 1:2, more preferably in the range from 1:1.5 to 1:1.8.

When the carbon material serving as a catalyst is prepared, the mixture of the non-metal compound, the metal compound, and the carbon-based raw material is obtained as described below. First, the carbon-based raw material, the metal compound, and the non-metal compound are mixed, and a solvent such as ethanol is added thereto as necessary, so as to adjust the total mixture amount. These materials are dispersed by an ultrasonic dispersion method. The dispersed product is heated at an appropriate temperature (for example, 60°C), and then dried so as to remove the solvent. This yields the mixture including the non-metal compound, the metal compound, and the carbon-based raw material.

Subsequently, the mixture thus obtained is heated under a reduction atmosphere or an inert gas atmosphere. As a result, the carbon-based raw material is doped with the non-metal atoms, and further doped with the metal atoms when the non-metal atoms and the metal atoms are coordinated with each other. The heating temperature is preferably in the range from 800°C or higher to 1000°C or lower, and the heating time is preferably in the range from 45 seconds or longer to less than 600 seconds. Since the heating time is short, the carbon material is produced efficiently, and the catalytic activity of the carbon material is further enhanced. The heating rate of the mixture at the beginning of heating in the heating process is preferably 50°C/second. This rapid heating further increases the catalytic activity of the carbon material.

The carbon material may further be subjected to acid cleaning. For example, the carbon material may be dispersed in pure water with a homogenizer for 30 minutes, added in 2M sulfuric acid, and then stirred at 80°C for 3 hours. This process minimizes elution of the metal components from the carbon material.

The production method described above allows the carbon material to have high electrical conductivity in which the amounts of inert metal compound and metal crystals are significantly reduced.

[Second Embodiment]

A microbial fuel cell 1A and a microbial fuel cell system 10A according to a second embodiment will be described below with reference to the drawings. The same elements as those in the first embodiment are designated by the same reference numerals in this embodiment, and overlapping explanations are not repeated below.

The microbial fuel cell 1A according to the present embodiment is required to satisfy the relationship of $T_1$ and $T_2$ represented by the expression (1), as in the case of the first embodiment. A positive electrode 4B of the present embodiment preferably has a configuration in which the gas diffusion layer 42 is partly placed on the water-repellent layer 41, as in the case of the positive electrode 4A described above.

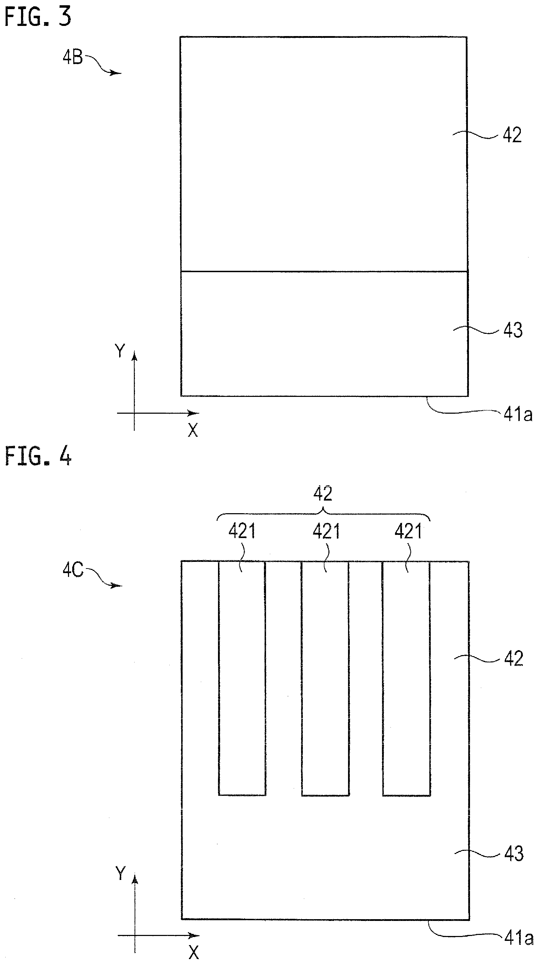

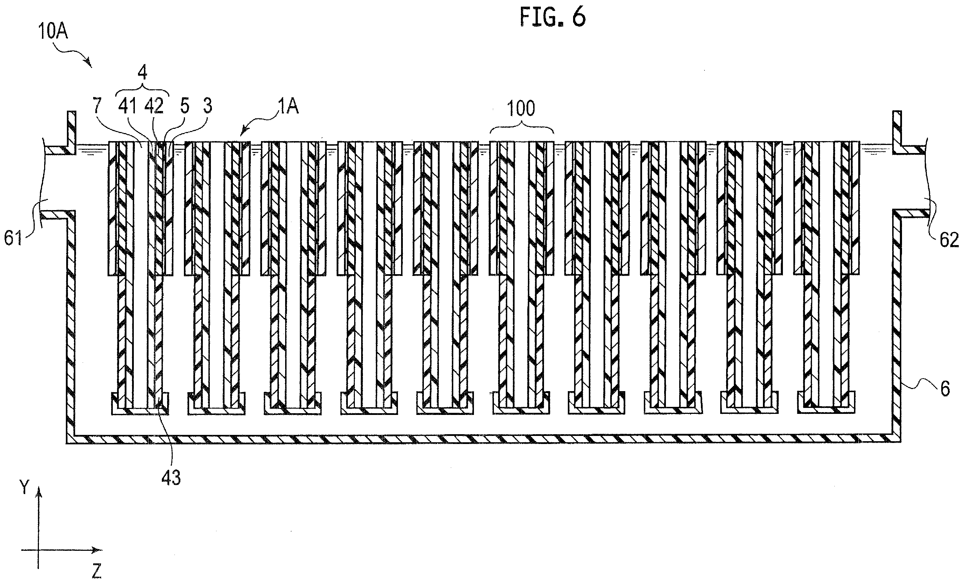

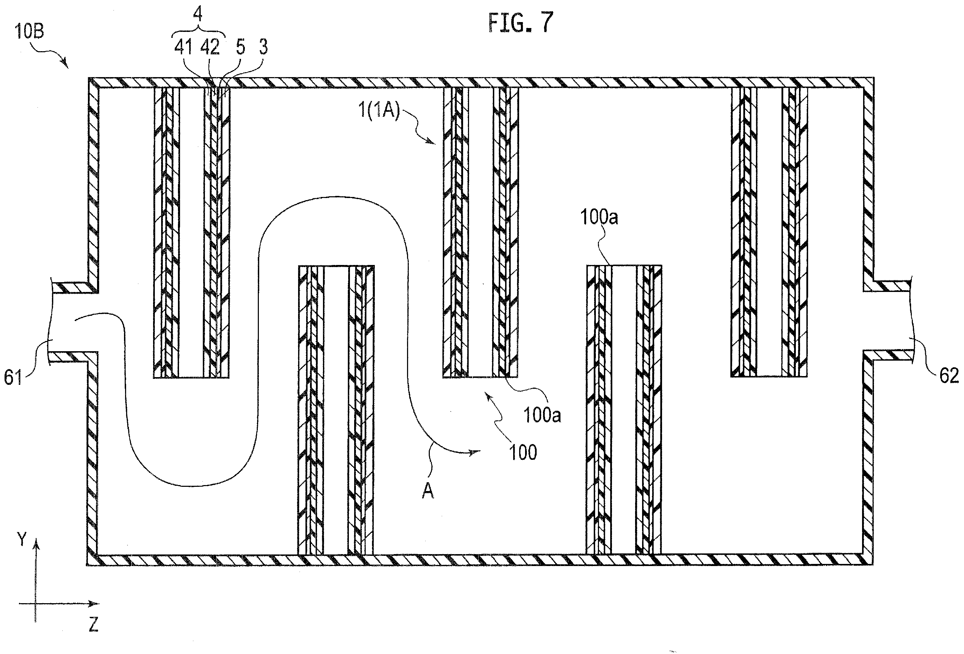

As shown in Fig. 3, the gas diffusion layer 42 of the present embodiment is preferably partly provided and located on the upper side of the positive electrode 4B. In particular, the gas diffusion layer 42 partly stacked on the water-repellent layer 41 is not provided on the lower side of the positive electrode 4B in the vertical direction Y but preferably provided only on the upper side. As described below, when the microbial fuel cells 1A are arranged in the stacking direction Z orthogonal to the vertical direction Y, as shown in Fig. 6 and Fig. 7, the power generation performance of the microbial fuel cells 1A tends to be higher on the upper side than on the lower side. In view of this, the gas diffusion layer 42 is preferably provided only on the upper side of the positive electrode 4B, and the negative electrode 3 is also preferably provided on the upper side of the positive electrode 4B corresponding to the gas diffusion layer 42. Since the gas diffusion layer 42 and the negative electrode 3 are not provided on the lower side where the power generation performance decreases, a decrease of the entire power generation performance of the microbial fuel cell 1A can be prevented. The decrease of the amounts of the gas diffusion layer 42 and the negative electrode 3 used in the microbial fuel cell 1A can further reduce the total cost of the microbial fuel cell system 10A.

As used herein, the expression "the gas diffusion layer 42 is provided on the upper side of the positive electrode 4B" means that the gas diffusion layer 42 is not provided at a lower side 41a of the water-repellent layer 41 in the vertical direction Y, as shown in Fig. 3.

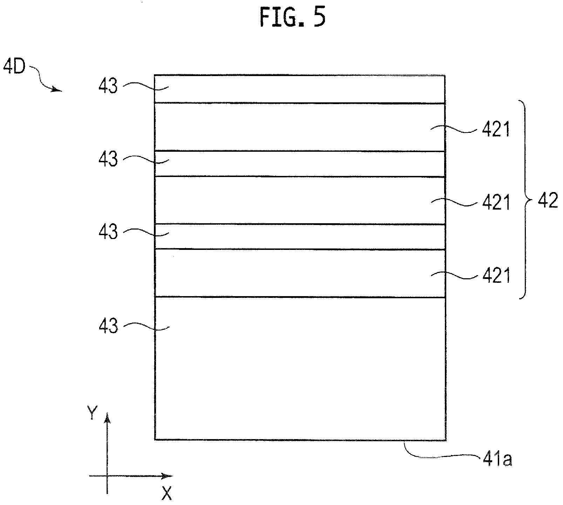

As shown in Fig. 4 and Fig. 5, the gas diffusion layer 42 of the present embodiment preferably includes a plurality of layers 421 stacked on the upper side of the water-repellent layer 41 and separated from each other in the direction orthogonal to the stacking direction of the gas diffusion layer 42 and the water-repellent layer 41. The separated layers 421 of the gas diffusion layer 42 are preferably arranged at regular intervals on the surface of the water-repellent layer 41 toward the negative electrode 3. This minimizes an excessive increase in distance between the negative electrode 3 and the gas diffusion layer 42. As a result, the reaction efficiency in the microbial fuel cell system 10A can be improved.

The plural layers 421 may be provided on the upper side of the positive electrode 4C and separated from each other in the plane direction X orthogonal to the vertical direction Y, as shown in Fig. 4. Alternatively, the plural layers 421 may be provided on the upper side of the positive electrode 4D and separated from each other in the vertical direction Y, as shown in Fig. 5.

In the positive electrodes 4B, 4C, and 4D according to the present embodiment, the gas diffusion layer 42 is preferably partly provided on the upper side of the positive electrode, and the holding body 43 for holding aerobic microorganisms is preferably provided on the lower side of the positive electrode where the gas diffusion layer 42 is not provided. As shown in Fig. 6, the gas diffusion layer 42 is provided on the upper side of the positive electrode where the power generation efficiency is high, and the negative electrode 3 and the separating membrane 5 are provided at positions corresponding to the gas diffusion layer 42. The holding body 43 for holding aerobic microorganisms is provided on the lower side of the positive electrode where the power generation efficiency is low. This configuration can implement the processing of purifying the electrolysis solution 2 more efficiently, while enhancing the power generation efficiency. As described above, the water-repellent layer 41 having air permeability can sufficiently supply oxygen to the aerobic microorganisms through the water-repellent layer 41 so as to cultivate the aerobic microorganisms. As a result, the processing of purifying the electrolysis solution 2 can be performed without leading to an increase in size or a complicated structure of the microbial fuel cell 1A.

As described above, the holding body 43 for holding aerobic microorganisms is preferably provided on the lower side of the respective positive electrodes 4B, 4C, and 4D. The holding body 43 may be provided not only on the lower side of the positive electrode but also in the spaces between the separated layers 421 of the gas diffusion layer 42 in the respective positive electrodes 4C and 4D. Since the purifying performance of the holding body 43 does not particularly vary on the upper side or on the lower side of the positive electrode, the holding body 43 provided between the layers 421 can improve the efficiency of purifying the electrolysis solution 2.

The microbial fuel cell system 10A according to the present embodiment includes a plurality of microbial fuel cells 1A each including the positive electrode 4B, 4C, or 4D described above. As shown in Fig. 6, the two microbial fuel cells 1A in the microbial fuel cell system 10A are arranged such that the water-repellent layers 41 are opposed to each other, in the same manner as the first embodiment. The space 7 filled with the gas phase is therefore interposed between the two water-repellent layers 41. The microbial fuel cell system 10A is also configured such that the space 7 is open to the outside air, or air is externally supplied to the space 7 via a pump, for example.

The microbial fuel cell system 10A includes a plurality of microbial fuel cell groups 100 each including the two microbial fuel cells 1A arranged such that the water-repellent layers 41 are opposed to each other. More particularly, as shown in Fig. 6, the microbial fuel cell system 10A includes the plural microbial fuel cell groups 100 arranged in the stacking direction Z. The electrolysis solution 2 is supplied to the case 6 from the supply port 61, flows in the stacking direction Z, and is discharged to the outside of the case 6 through the discharge port 62. The plurality of the microbial fuel cell groups 100 can further enhance both the power generation efficiency and the purifying efficiency of the microbial fuel cell system 10A.

The microbial fuel cell groups 100 according to the present embodiment are preferably arranged such that the electrolysis solution 2 flows in a wavelike manner inside the case 6, as indicated by arrow A shown in Fig. 7. In particular, the plural microbial fuel cell groups 100 are arranged in the stacking direction Z such that side surfaces 100a of the microbial fuel cell groups 100 are alternately in contact with a left wall 6a and a right wall 6b of the case 6. The wavelike flow of the electrolysis solution 2 in the microbial fuel cell system 10B can increase the contact efficiency of the electrolysis solution 2 with the negative electrodes 3 and the holding bodies 43, so as to further enhance the power generation efficiency and the purifying efficiency of the microbial fuel cell system 10B.

The arrangements of the microbial fuel cell groups 100 shown in Fig. 6 and Fig. 7 are not necessarily applied only to the case of the microbial fuel cell 1A according to the second embodiment, and may also be applied to the case of the microbial fuel cell 1 according to the first embodiment. The microbial fuel cell system according to the present embodiment may combine the microbial fuel cell according to the first embodiment and the microbial fuel cell 1A according to the second embodiment as appropriate.

The entire content of Japanese Patent Application No. P2014-025391 (filed on February 13, 2014) is herein incorporated by reference.

While the present embodiment has been described above by reference to the examples, the present embodiment is not intended to be limited to the descriptions thereof, and various modifications and improvements will be apparent to those skilled in the art.

INDUSTRIAL APPLICABILITY

According to the present invention, the ratio of the area of the negative electrode holding microorganisms to the area of the gas diffusion layer of the positive electrode is set to an appropriate value depending on the respective properties of the negative electrode and the positive electrode, so as to minimize a performance imbalance between the positive electrode and the negative electrode in the microbial fuel cell.

REFERENCE SIGNS LIST

| 1, 1A | MICROBIAL FUEL CELL |
| 2 | ELECTROLYSIS SOLUTION |
| 3 | NEGATIVE ELECTRODE |
| 4, 4.A, 4B, 4C, 4D | POSITIVE ELECTRODE |
| 6 | CASE |
| 7 | SPACE |

| 10, 10A, 10B | MICROBIAL FUEL CELL SYSTEM |
|---|---|
| 41 | WATER-REPELLENT LAYER |
| 42 | GAS DIFFUSION LAYER |
| 100 | MICROBIAL FUEL CELL GROUP |

**Claims**

1.  A microbial fuel cell comprising:

    an electrolysis solution including organic matter;
    a negative electrode holding anaerobic microorganisms and being in contact with the electrolysis solution; and
    a positive electrode including a water-repellent layer and a gas diffusion layer placed on the water-repellent layer,
    wherein, when a ratio of an area of the negative electrode to an area of the gas diffusion layer is defined as $T_1$,
    and a ratio of a maximum current density of the positive electrode at an electric potential of the positive electrode
    in an electrode system including the electrolysis solution, the negative electrode, and the positive electrode to
    a maximum current density of the negative electrode at an electric potential of the negative electrode in the
    electrode system is defined as $T_2$, the ratios $T_1$ and $T_2$ satisfy a relationship of $T_2^{1/2} \leq T_1 \leq T_2^2$.

2.  The microbial fuel cell according to claim 1, wherein a holding body for holding aerobic microorganisms is placed on the water-repellent layer.

3.  The microbial fuel cell according to claim 1 or 2, wherein the gas diffusion layer is partly placed on the water-repellent layer.

4.  The microbial fuel cell according to any one of claims 1 to 3, wherein the gas diffusion layer includes a plurality of layers placed on the water-repellent layer and separated from each other in a direction vertical to a stacking direction of the negative electrode and the positive electrode.

5.  The microbial fuel cell according to any one of claims 1 to 4, wherein the gas diffusion layer is partly placed on an upper side of the positive electrode.

6.  The microbial fuel cell according to any one of claims 1 to 3, wherein the gas diffusion layer includes a porous electrical conductive material and a catalyst supported on the electrical conductive material.

7.  The microbial fuel cell according to claim 6, wherein the catalyst is a carbon material doped with metal atoms.

8.  A microbial fuel cell system comprising a plurality of microbial fuel cells each corresponding to the microbial fuel cell according to any one of claims 1 to 7.

9.  The microbial fuel cell system according to claim 8, wherein each pair of the microbial fuel cells is arranged such that the water-repellent layers are opposed to each other.

10. The microbial fuel cell system according to claim 9, comprising a plurality of microbial fuel cell groups each including the pair of the microbial fuel cells arranged such that the water-repellent layers are opposed to each other.

11. A method for using a microbial fuel cell, comprising:

    preparing the microbial fuel cell comprising: an electrolysis solution including organic matter; a negative electrode
    holding anaerobic microorganisms and being in contact with the electrolysis solution; and a positive electrode
    including a water-repellent layer and a gas diffusion layer placed on the water-repellent layer; and
    operating the microbial fuel cell in a manner such that, when a ratio of an area of the negative electrode to an
    area of the gas diffusion layer is defined as $T_1$, and a ratio of a maximum current density of the positive electrode
    at an electric potential of the positive electrode in an electrode system including the electrolysis solution, the
    negative electrode, and the positive electrode to a maximum current density of the negative electrode at an electric potential of the negative electrode in the electrode system is defined as $T_2$, the ratios $T_1$ and $T_2$ satisfy a relationship of $T_2^{1/2} \leq T_1 \leq T_2^{2}$.

## FIG. 1

## FIG. 3

## FIG. 4

FIG. 5

FIG. 6

FIG. 7

**INTERNATIONAL SEARCH REPORT**

| International application No. |
| --- |
| PCT/JP2015/000285 |

A.    CLASSIFICATION OF SUBJECT MATTER
*H01M8/16*(2006.01)i, *H01M4/86*(2006.01)i, *H01M4/90*(2006.01)i, *H01M4/96* (2006.01)i, *H01M8/02*(2006.01)i

According to International Patent Classification (IPC) or to both national classification and IPC

B.    FIELDS SEARCHED

Minimum documentation searched (classification system followed by classification symbols)
H01M8/16, H01M4/86, H01M4/90, H01M4/96, H01M8/02

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| A | JP 2010-33823 A  (Kurita Water Industries Ltd.), 12 February 2010 (12.02.2010), paragraphs [0028] to [0037], [0051] to [0066]; fig. 1 (Family: none) | 1–11 |
| A | JP 2011-65875 A  (Kurita Water Industries Ltd.), 31 March 2011 (31.03.2011), paragraphs [0015], [0025] to [0040]; fig. 1 to 2 (Family: none) | 1–11 |

☒   Further documents are listed in the continuation of Box C.          ☐   See patent family annex.

| | |
| --- | --- |
| *    Special categories of cited documents: "A"   document defining the general state of the art which is not considered    to be of particular relevance "E"   earlier application or patent but published on or after the international filing date "L"   document which may throw doubts on priority claim(s) or which is cited to establish the publication date of another citation or other special reason (as specified) "O"   document referring to an oral disclosure, use, exhibition or other means "P"   document published prior to the international filing date but later than the priority date claimed | "T"   later document published after the international filing date or priority date and not in conflict with the application but cited to understand the principle or theory underlying the invention "X"   document of particular relevance; the claimed invention cannot be considered novel or cannot be considered to involve an inventive step when the document is taken alone "Y"   document of particular relevance; the claimed invention cannot be considered to involve an inventive step when the document is combined with one or more other such documents, such combination being obvious to a person skilled in the art "&"   document member of the same patent family |

| Date of the actual completion of the international search 09 April 2015 (09.04.15) | Date of mailing of the international search report 21 April 2015 (21.04.15) |
| --- | --- |
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (July 2009)

**INTERNATIONAL SEARCH REPORT**

International application No.

PCT/JP2015/000285

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/037261 A1 (Ebara Corp.), 05 April 2007 (05.04.2007), paragraphs [0099], [0103] to [0104], [0108] to [0111]; fig. 2 to 4 & JP 2007-90232 A        & US 2009/0142627 A1 & EP 1939968 A1          & CN 101317297 A | 1-11 |

Form PCT/ISA/210 (continuation of second sheet) (July 2009)

**EP 3 107 141 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010102953 A
- JP P2014025391 B